# EUROPEAN PATENT APPLICATION

(11) **EP 4 169 690 A1**
(43) Date of publication of application: **26.04.2023**
(21) Application number: 22200257.8
(22) Date of filing: 07.10.2022
(51) Int. Cl.: B29C 37/00, B29C 37/02, B29C 35/08

(54) **MOLDED PRODUCTS AND SYSTEMS AND METHODS FOR MAKING MOLDED PRODUCTS**

(30) Priority: 21.10.2021 US 202117507365
(71) Applicant: Brunswick Corporation, Mettawa, Illinois 60045 (US)
(72) Inventor: Minogue, Sean, Satellite Beach, 32937 (US); Gathright, Miles F., New Smyrna Beach, 32168 (US); Anderson, Kevin R., Fond du Lac, 54936 (US); Mallek, Jason M., Oshkosh, 54902 (US); Welk, Gerald R., Oshkosh, 54904 (US)
(74) Representative: Håmsø Patentbyrå AS

(57) **Abstract**

The invention relates to a method of making a molded product (14). The method includes obtaining a mold (6) having a cavity defined by interior surfaces (36, 46) and applying a gelcoat (50) into the mold. The method further includes at least partially curing the gelcoat (50) within the mold, dispensing a viscous polymeric material (70) into the mold, and curing the polymeric material while the polymeric material (70) is sandwiched between the gelcoat (50).

## Description

### FIELD

The present disclosure generally relates to molded products and systems and methods for making molded products, and more particularly to molded products and systems and methods for making molded products for marine vessels, parts, and accessories.

### BACKGROUND

The following U.S. Patents and Patent Applications provide background information.

U.S. Patent Nos. 6,878,437 and 7,105,073 disclose thermoplastic multi-layer composite structures as co-extruded acrylic polypropylene outer skins and high melt strength polypropylene substrates that are attracted to a first surface of a polypropylene foam core. An inner polypropylene skin is attached to a second surface of the foamed core, which can either be constructed from an expanded polypropylene or an extruded polypropylene and is attached to the outer and inner skin through the use of an adhesive.

U.S. Patent No. 9,779,351 discloses a marine vessel hull having an outer hull layer and an inner liner connected to the outer hull layer forming a cavity therebetween. A wireless identification device is contained within the cavity between the outer hull layer and the inner liner. The wireless identification device stores and wirelessly transmits at least one of a vessel identifier, manufacture information, and ownership information for the marine vessel.

U.S. Patent Application Publication No. 2004/0089984 discloses a method of resin transfer molding that uses an open base mold filled with fiberglass material and a soft tool sealed over the base mold. A vacuum is applied to a vacuum chamber that surrounds the mold and communicates with the fiberglass material through vacuum conduits. Resin is injected into the closed mold and is drawn through the fiberglass material to the edge of the mold with the assistance of the vacuum. The soft tool is preferably a flexible sheet having an edge seal to connect to the base mold and a vacuum channel with a vacuum port that surrounds the mold.

U.S. Patent Application Publication No. 2005/0161861 discloses an apparatus and a method of preparing fiber preforms that disperse fibers and binder on a forming support surface such that the materials are conditioned and then applied to the surface where the composite material solidifies. Reinforcing material, such as fiber, is mixed with binder, such as thermoplastic or thermoset materials, so that the materials adhere. Then, the adhesive mixture is dispersed in a controlled pre-determined weight ratio on the support surface where the mixture sticks to the support surface, cools and solidifies. The deposited mixture can be an open mat having interstices between fibers. The deposited mixture can also be shaped further into a final desired shape before complete solidification.

U.S. Patent Application Publication No. 2018/0186043 disclose systems, methods, and non-transitory computer readable media for manufacturing boat parts made of a fiberglass. The fiberglass includes resin and glass and is made using a mold and according to a specification that defines a desired quantity of the fiberglass to apply to the mold. A control module is configured to make a comparison in real-time between an actual quantity of the fiberglass applied by an applicator and the desired quantity of the fiberglass to apply to the mold, and to calculate a remaining quantity of the fiberglass to apply to the mold to thereby achieve the desired quantity. The control module is configured to cause an indicator device to indicate in real-time the remaining quantity of the fiberglass to apply to the mold.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter. The invention is defined by the independent claims. The dependent claims define advantageous embodiments.

One embodiment of the present disclosure generally relates to a method of making a molded product. The method includes obtaining a mold having a cavity defined by interior surfaces and applying a gelcoat into the mold. The method further includes at least partially curing the gelcoat within the mold, dispensing a viscous polymeric material into the mold, and curing the polymeric material while the polymeric material is sandwiched between the gelcoat.

Another embodiment generally relates to a molded product produced in a mold. The molded product includes a first exterior surface formed by a first gelcoat layer, the first gelcoat layer being at least partially cured. A second exterior surface is formed by a second gelcoat layer, the second gelcoat layer being at least partially cured, and the second exterior surface being opposite the first exterior surface with a height defined therebetween. A central layer is formed by a polymeric material, the central layer being sandwiched between the first gelcoat layer and the second gelcoat layer, the central layer being cured. The thickness of the central layer is at least 80% of the height between the first and second exterior surfaces.

Another embodiment generally relates to a method of making a molded product. The method includes obtaining a mold a first portion and a second portion that when closed together for a cavity between interior surfaces thereof. The method further includes applying a release agent onto the interior surfaces of the first portion and the second portion and applying a gelcoat on top of the release agent on the interior surfaces. The method further includes at least partially curing the gelcoat on the interior surfaces and dispensing a viscous, thermoplastic, polymeric material onto the gelcoat of the first portion of the mold, the dispensed polymeric material having a thickness of at least 0.5 inches. The method further includes closing the first portion and the second portion of the mold together such that the polymeric material is sandwiched between the gelcoat of the interior surfaces and curing the polymeric material to form an untrimmed product. The method further includes removing the untrimmed product from the mold and trimming edges of the untrimmed product to produce the molded product.

Various other features, objects and advantages of the disclosure will be made apparent from the following description taken together with the drawings.

### BRIEF DESCRIPTION OF THE DRAWINGS

The present disclosure is described with reference to the following drawings.
FIG. 1 is a perspective view of an exemplary prior art method for making a molded product.
FIG. 2 is a top view of the molded output following the method of FIG. 1 showing the final molded product before trimming.
FIGS. 3 and 4 are exploded views depicting the prior art method of FIG. 1, and a method according to the present disclosure, respectfully, for making a molded product.
FIG. 5 is a flow chart of an exemplary method for making a molded product according to the present disclosure.
FIG. 6 is a perspective view of an exemplary system for making a molded product according to the present disclosure.
FIG. 7 is a schematic view of an exemplary control system such as may be incorporated within the system of FIG. 6.

### DETAILED DISCLOSURE

Many composite products within the marine industry, such as boat hulls, parts, or accessories (as collectively referred to as "products" or "parts"), are made via fiberglass molding processes. Composite parts in the marine industry typically consist of a polymeric matrix that is reinforced with another material. Reinforcements include, but are not limited to, ceramics in certain morphologies such as glass or carbon fibers in the form of fabrics or granulated ceramic compounds, or other polymeric reinforcement fibers such as PET or aramid (e.g. Kevlar). In some cases, metal reinforcements are used but, due to their higher density and susceptibility to corrosion in the harsh marine environment, their use is limited. The production of small, composite parts is particularly costly and challenging for manufacturers. Smaller molded parts are very labor intensive to set up and include a substantial amount of waste material, typically between 20% and 40% of the total material used in production. Moreover, these smaller molded parts require substantial standing and hand-finishing after the initial molding process to produce the final molded product. The finishing processes presently known in the art (e.g., sanding fiberglass) necessarily require a significant amount of personal protective equipment (PPE) for operators, including full body coverage, a respirator face mask, and the like. These processes further require an inordinate amount of floor space as compared to other manufacturing processes.

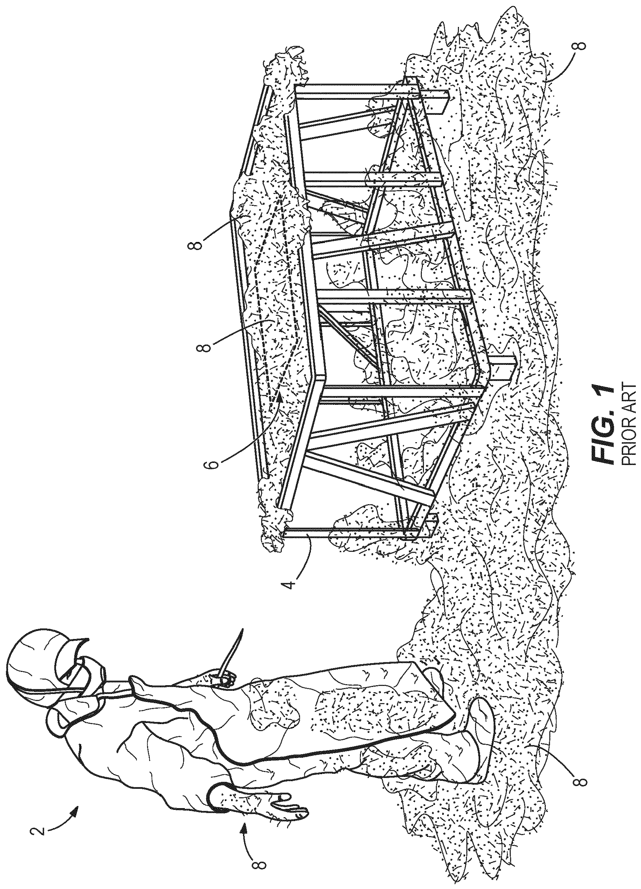

FIG. 1 depicts an operator 2 working to produce a molded product using methods presently known in the art. The molded product is formed by filling a mold 6 on a work table 4 with raw materials, including fiberglass material 8. As shown in the drawing, it is very messy working with fiberglass material 8, which often comes in sheets or stranded roving. Additionally, substantial PPE is required for the operator 2, and also substantial and frequent cleaning of the area based on the disorderly nature of working with this fiberglass material 8.

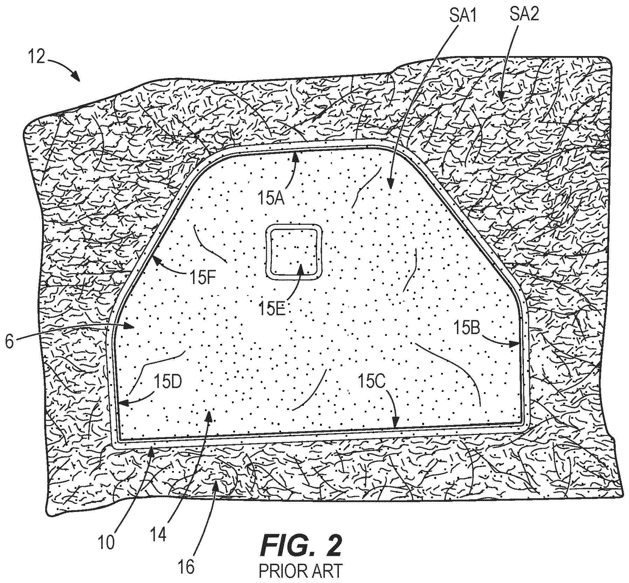

FIG. 2 depicts an example of molded output 12 produced by prior art methods such as that shown in FIG. 1. Once released from the mold 6, the molded output 12 includes a portion that will become the final molded product 14, but also a substantial wasted portion 16 beyond the perimeter 10 of the final molded product 14. A first surface area SA1 is shown corresponding to the portion that will become the final molded product 14, and a second surface area SA2 corresponding to the wasted portion 16. As discussed above, the second surface area SA2 may be 20-40% of the sum of the first surface area SA1 and the second surface area SA2, for example.

In the example shown, the final molded product 14 (in conjunction with the mold 6 used to produce it) includes at least a first end 15A, second end 15B, third end 15C, and fourth end 15D each having an edge 15F. It should be recognized that other shapes, sizes, and configurations of the final molded product 14 are also contemplated by the present disclosure. The present example further shows a recessed portion 15E within the final molded product 14, which as discussed further below is formed by a projection in the mold 6 to provide the desired shape and contour of the final molded product 14.

Molded products presently known in the art, such as that shown in FIG. 2, are typically formed of raw materials categorized as thermosets. Within the marine industry, typical thermosets for boat hulls and other parts and accessories are formed by fiberglass-reinforced resins combined with an initiator (also referred to as a catalyst), which upon the cross-lining of polymer chains generates heat and eventually forms a solid. Once solidified, the shape of the solidified molded output cannot be changed, including by attempting to reheat, melt, and reconstruct the molded output.

The present inventors have recognized that the use of thermosets for producing molded products is labor intensive and the overall messy and disorderly nature of working with fiberglass complicates the workplace environment. Moreover, these prior art processes result in molded output that cannot be recycled. This means that any wasted material or defective products must simply be scrapped, and that any final molded products no longer in use must ultimately end up in the landfill (including parts, accessories, and even massive hulls). Moreover, these thermoset-based items essentially do not easily break down, and thus will remain in the landfill for an extended period of time. Alternative materials categorized as thermoplastics can be re-melted and thus recycled. However, thermoplastics presently known in the art cannot be used for the production of a final molded product within a mold due to the heat generated in the exotherm process and the high pressures associated with thermoplastic processing that will most often destroy a typical mold for a marine article. In processes using thermoplastics presently known in the art, the molded product is limited to being no greater than 3/4 inch, or even 1/2 inch, in thickness due to the heat being generated, which otherwise results in deformation. Within the marine industry, these maximum thicknesses are insufficient to provide the necessary strength, stiffness, and durability of the intended use, for example as a hatch cover in a boat's deck, which is routinely stepped on by operators. Therefore, fiberglass materials 8 remain the material predominantly used in the art for marine products.

Through experimentation and development, the present inventors have invented alternate processes for producing molded products, including using the same molds already available for making parts via prior art methods. In particular, the present inventors have developed new processes for making molded products through the use of newly identified thermoplastics. One such thermoplastic is Elium resin produced by the Arkema corporation, located at 900 First Avenue, King of Prussia, PA, U.S.A. In contrast to thermosets, thermoplastics can be deformed and even remelted when reheated, and are thus recyclable. Not only does this allow any wasted portions and/or defective parts during manufacturing to be recycled and reused (e.g., by grinding the parts up, remelting and reforming into a new geometry), but also provides that retired boats, parts, and accessories can be recycled rather than ending up in a landfill. Additionally, as discussed further below, the presently disclosed processes for producing molded parts using thermoplastics (which were not possible with thermoplastics previously known in the art) greatly reduces the time and effort in producing molded products, while also reducing waste and hazards for operators.

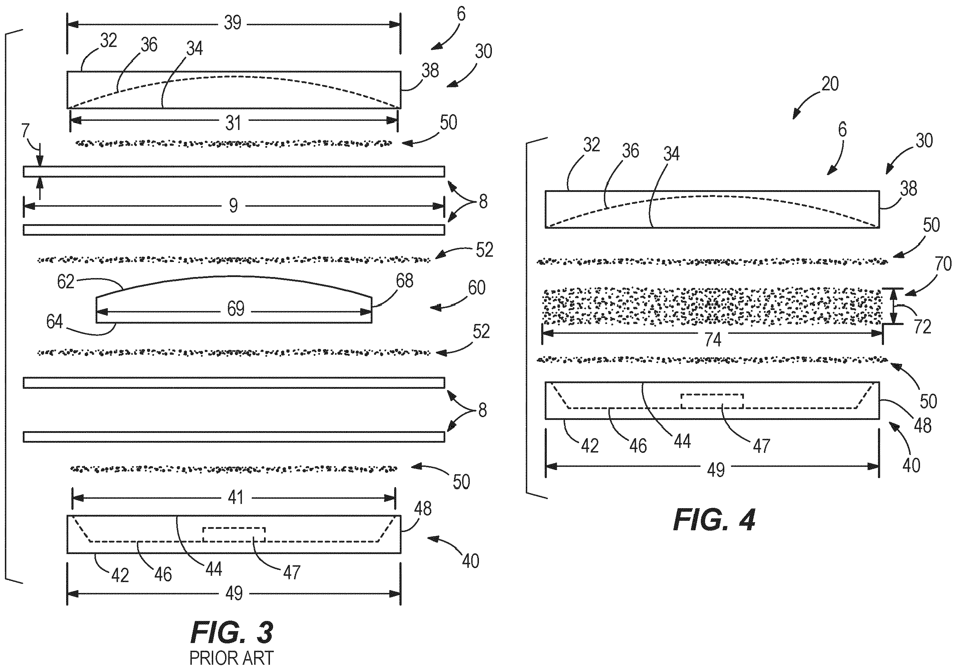

FIG. 3 depicts an exploded representation of the molds 6 (also shown in FIG. 2), and raw materials used to make a molded product using methods presently known in the art. A mold 6 includes a first shell 30 and a second shell 40 that closed together to form a cavity having the completed shape for the final molded product. The first shell 30 includes an outer side 32 and an opposite inner side 34, with an inside surface 36 defined inwardly from the inner side 34 as known in the art. The first shell 30 further includes ends 38 connecting the outer side 32 to the inner side 34, whereby a width 39 is defined between the ends 38. A width 31 is also defined within the inside surface 36, which here is less than the width 39 between the ends 38. Similarly, the second shell 40 includes an outer side 42 and an inner side 44 connected together by opposite ends 48 spanning a width 49 apart. An inside surface 46 again extends inwardly from the inner side 44 by a width 41. In the example shown, the second shell further includes a projection 47 that extends upwardly away from the outer side 42 as part of the inside surface 46. This projection 47 (and other projections or recesses, not shown) provide for different contours and features of the final molded product in a manner presently known in the art.

With continued reference to FIG. 3, the process for using the mold 6 as presently known in the art provides for hand treating the mold surfaces (e.g., inside surface 36 and inside surface 46) with a release agent (not presently shown). Next, approximately three passes of a gelcoat 50 known in the art are hand sprayed onto the inside surfaces 36, 46 of the first shell 30 and second shell 40, respectively. The gelcoat 50 protects the molds 6 and helps with release of the molded product, as the core (discussed below) is abrasive and reactive. The gelcoat 50 also provides that the molded part ages with other parts (for example, ages with the hull) in terms of discoloration from UV rays and the like.

The gelcoat 50 is applied to the mold 6 at a rate of approximately 0.007 inches - 0.008 inches per pass, or a total of between 0.020-0.025 inches total for example. The gelcoat coating may also be referred to as a gelcoat "skin". The gelcoat 50 is then cured, for example to 80% or greater cross link density, and for example using cross-linking initiators, infrared or ultraviolet light.

From here, one or more fabric layers are applied on the inside surface 36, 46 on top of the gelcoat 50. In certain examples presently known in the art, the one or more fabric layers are sheets of fiberglass material 8. The sheets of fiberglass material 8 are may be formed of continuous fiber mats (CFMs) made of cut glass and may also contain and a blend of polyester/vinylester resin in a manner known in the art. The fiberglass may be a woven product of various textile forms such as cloths, knits or twills, to name a few. The fiberglass mats may also be in the form of a non-woven sheet product, such as but not limited to Chopped Strand Mat (CSM). The specific form of the mats being selected is based on numerous factors such as the magnitude and direction of loads and subsequent stresses in the final part, or may be based on manufacturing considerations such as the ability of the mats to conform to internal mold geometries (e.g., protrusion 47 in Figure 3). If a resin is initially incorporated into a continuous fiber product well in advance of being placed into a mold it is commonly called a "pre-preg". The final composite part that incorporates these reinforcing continuous fiber mats, made from various geometrical arrangements of the continuous fibers themselves, is called a continuously - reinforced composite. To ensure appropriate geometrical sizing for a given mold 6, pre-formed CFMs are cut by a Computer Numeric Controlled (CNC) machine to form the fiberglass material 8 specific to the mold 6 being used. Many production facilities have hundreds or even thousands of molds in active production. Therefore, if there are over 300 different molds in production for a given facility, each of the 300+ different molds would have a corresponding CNC program for cutting the fiberglass material 8 to be positioned on the gelcoat 5. This adds to the complexity of maintaining a database of CNC programs current with the latest CNC machinery, increases the inventory of fiberglass material 8 cut into sheets that must be kept on hand for use in each mold 6, and increases the risk of error in pairing the correct fiberglass material 8 with the intended mold 6 for production of a given part. Additionally, CNC cutting the appropriate shape of fiberglass material 8 from a preformed CFM necessarily creates unusable waste in the preformed CFM.

With continued reference to FIG. 3, an adhesive 52 is next applied to at least the inner-most sheet of the fiberglass material 8 (or in other words nearest to the core 60 to be discussed further below). The adhesive 52 may be of a type presently known in the art, such as a spray adhesive 71 manufactured by the 3M corporation, and provides for fixation between the core 60 and the fiberglass material 8 when the mold 6 is closed. FIG. 3 further shows a core 60 positioned in either the first shell 30 or the second shell 40 to be sandwiched by the adhesives 52 on the fiberglass materials 8 positioned therein. The core 60 may be formed of PET foam, balsa wood, or other materials as presently known in the art, which are custom sized and shaped based on the particular mold 6 being used. As shown in FIG. 3, the core 60 has a first side 62 facing the first shell 30 and a second side 64 facing the second shell 40 when the mold 6 is closed. The core 60 further extends between ends 68 defining a width 69 therebetween. The core 60 is sized and shaped to provide rigidity based on its Young's modulus and geometrical section modulus, or moment of inertia, for the final molded product, and also to define the contours of the final molded product.

Once all components shown in FIG. 3 have been positioned as described above, the mold 6 is closed such that the inner side 34 of the first shell 30 and inner side 44 of the second shell 40 are brought together, respectively. This configuration of mold 6 may also be referred to as a clam shell configuration. It should be recognized that other configurations of mold 6 are also contemplated by the present disclosure, including those with greater or fewer numbers of shells, and/or those in which one or more materials are added after some of these shells are closed, for example.

In a configuration of FIG. 3, the molded output 12 of FIG. 2 is produced after allowing the combined materials to cure for a minimum of 2 hours, although this is typically in range of 4-8 hours or even overnight or longer. Once sufficiently cured, the mold 6 is opened to yield the mold output 12 of FIG. 2, as discussed above. The molded output 12 of FIG. 2 includes a substantial surface area SA2 of waste relative to the final molded product 14 desired to remain. This wasted portion 16 is hand-trimmed away using tools such as saws or rotary abrasive wheels capable of cutting through the fiberglass material 8. Once trimmed to the approximate perimeter 10 desired, hand sanding is required by the operator to provide a smooth finish for the final molded product 14. As discussed above, the configuration of FIG. 3 and processing of the molded output 12 of FIG. 2 is time intensive, and generates health and safety risks requiring substantial Personal Protective Equipment (PPE) when dealing with the fiberglass materials and the subsequent dust irritants that occur in these finishing operations. The present inventors have further recognized that there is a risk for operator injury when trimming the wasted portion 16 away from the final molded product 14, including cuts, slivers from the fiberglass material 8, and dust irritants.

FIG. 4 is an exploded view for producing a molded product according to the present disclosure. The present inventors have recognized that developing an alternate material for positioning between the portions of the mold 6 would eliminate multiple steps and components of that shown in FIG. 3, including a reduction in waste and a substantial reduction in the time and effort of production. However, the resulting molded product remains of the same exact size and shape as those produced with techniques previously known in the art, and still use the same molds 6 already owned. Specifically, the present inventors identified a polymeric, monolithic material having specific properties to yield molded products suitable as replacements to those produced by prior art methods. In certain example, the polymeric material 70 is unreinforced and/or is a discontinuously reinforced viscous polymer. In other examples, the polymeric material is a thermoplastic that may be homogenous and reinforced or unreinforced. In still other examples, the polymeric material is a liquid acrylic. One identified acceptable polymer is Elium resin, which as stated above is available from the Arkema corporation.

As shown in FIG. 4, the same mold 6 described above is again used, whereby the same release agent and gelcoat 50 is also be applied to the inside surfaces 36, 46. This gelcoat 50 may be applied in a manner presently known in the art, or robotically according to the presently disclosed methods as described below. The gelcoat 50 is then cured, for example using a technique known in the art such as a chemical initiator or using infrared or ultraviolet light.

Rather than custom-cutting different fiberglass material 8 to be positioned within the mold 6, the presently disclosed methods dispense the polymeric material 70 described above directly within one or more portions of the mold 6. The quantity by weight and/or volume of the polymeric material 70 to be dispensed may be controlled using optical detection (e.g., using cameras and other imaging techniques known in the art), or to a prespecified weight or quantity dispensed as determined by a commercially available weight scale or flow meter, for example. In the example shown, the polymeric material 70 is filled to result in an approximate height 72 and width 74 corresponding to the particular mold 6 in use, controlled by a method described above. It should be recognized that the mold 6 may be filled on both sides, for example in the first shell 30 and second shell 40, or in a single side, depending on the shape and configuration of the final molded product desired. The mold 6 is then closed in a manner presently known in the art and allowed to cure to a structural condition. In certain embodiments, the polymeric material is cured for to a structural condition in less than 2 hours.

In certain examples, the pattern in which the polymeric material 70 is applied to the mold 6 is optimized to provide for air evacuation from the mold 6. Additionally or alternatively, the fill pattern for the polymeric material may be configured to minimize impinging flow fronts and other discontinuities upon closing the mold. The present inventors have recognized that the result of this optimization is an improved, more consistent hatch structure, and thus improved performance and quality for the molded product.

In certain embodiments, the mold 6 may be closed after applying the gelcoat 50 whereby the polymeric material 70 is injected by pressure or pulled by vacuum (for example) into the mold 6, rather than being dispensed while the mold 6 is opened. The present inventors have recognized that in certain configurations of molds, injection by pressure (or pulling by vacuum) provides for minimal air entrapment and flow front discontinuities in the finished hatch, again providing sound structure of performance and quality. In certain examples, a static mixer may be used to combine a resin and a reinforcement immediately prior to placing the polymeric material 70 into the mold 6. In certain embodiments, wetting the reinforcement by static mixing with the polymeric resin immediately prior to insertion in the mold results in a very homogeneous, uniform distribution of reinforcement in the final reinforced composite marine part.

The present inventors have recognized that applying the polymeric material 70 within the mold 6 as presently disclosed is much cleaner than processes for making molded products presently known in the art. The polymeric material 70 does not need to extend beyond the mold 6, but simply be filled sufficiently to fill the cavity therein. Additionally, the properties of the polymeric material 70 require a much shorter cure time then the curing of fiberglass materials 8 as presently known in the art. In certain examples, the polymeric material 70 is configured to exotherm, cure, and cool to near room temperature in approximately 20 minutes to 1.5 hours, providing a dramatic improvement over techniques presently known in the art. This reduction in curing time in turn greatly increases throughput, thereby reducing the cost and space requirements for producing the molded product.

A further benefit of the use of the polymeric material 70, versus the use of fiberglass material 8 as presently known in the art, is a much easier trim process for turning the molded output 12 into the final molded product 14, which may be trimmed using a multiaxial CNC milling operation or waterjet cutting tool leaving a subsequent edge requiring no hand sanding for finishing. Moreover, because the polymeric material 70 may be dispensed with great accuracy, rather than positioning oversized fiberglass material 8 within the molds 6, the present inventors have determined that the second surface area SA2 corresponding to the wasted portion 16 of the molded output 12 is greatly reduced (see FIG. 2). In certain examples, the second surface area SA2 is less than 3% of the overall surface area of the molded output 12. Additionally, the polymeric material 70 advantageously provides that, after trimming off the waste portion 16 to yield the final molded product 14, no further sanding is required. This saves time and effort versus processes presently known in the art, while also eliminating hazards for the operator. As discussed above, the wasted portion 16 and other scrap material may also be ground up and recycled to form new molded products, as opposed to being landfilled as in the case of the prior art.

Relatedly, the remaining edge after cutting the final molded product 14 (the perimeter 10) advantageously has a clean, monolithic appearance versus a sanded fiberglass material 8 sandwiched according to the prior art. Additionally, whereas exposed fiberglass material 8 is prone to water uptake by wicking from capillary action along the continuous fiberglass strands, the polymeric material 70 is not. This results in better stability, durability, and performance of the molded product over time.

The present inventors have further recognized that trimming the wasted portion 16 for molded outputs made by the present disclosure (i.e., using a polymeric material 70 rather than fiberglass material 8 known in the art) is much less abrasive, and thus less damaging to the cutting tool, and dramatically mitigates airborne dust which would otherwise be a worker hazard. This increases tool life, decreases tool expense, and/or decreases the need for worker PPE, thereby saving cost and/or complexity in the overall process and improving worker comfort and safety.

Another benefit of using the polymeric material 70 to make molded products according to the present disclosure results from the polymeric material 70 being designed to provide for a chemical bond with the gelcoat 50. No chemical bond is formed between the gelcoat 50 and fiberglass material 8 as presently known in the art. The present inventors have discovered that the result of this chemical bonding is less gelcoat 50 cracking in service over prior art processes, resulting in an improved appearance and longer life for the molded product.

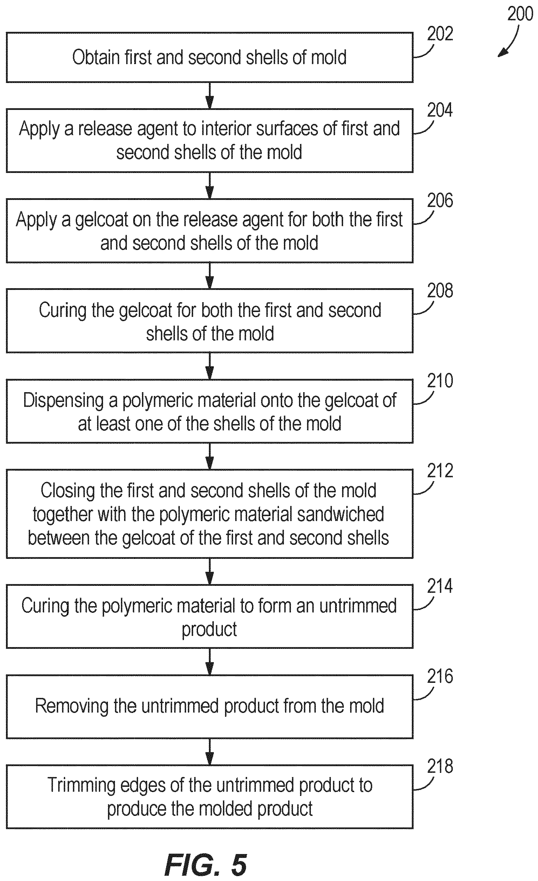

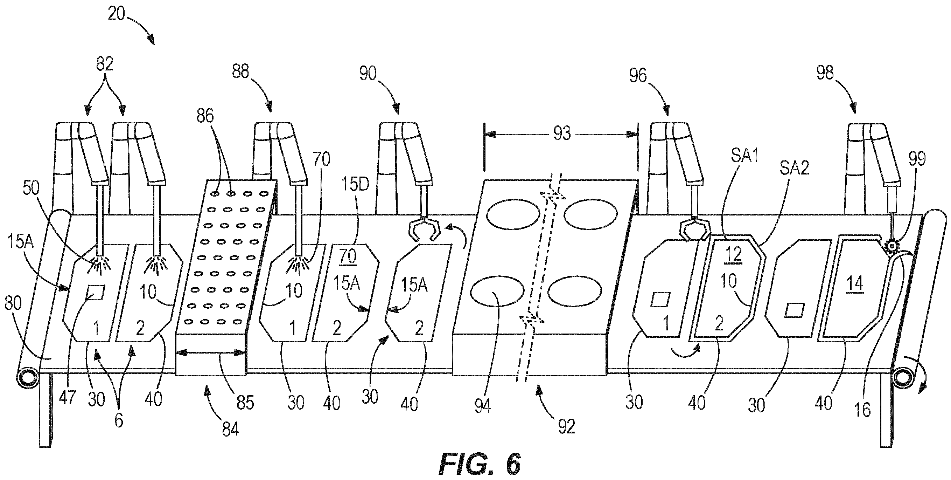

FIG. 5 provides an exemplary process 200 for making a molded product according to the present disclosure. Step 202 provides for obtaining first and second shells of a mold configured to be closed together to form the final molded product. Step 204 provides for applying a release agent to the interior surfaces of the first and second shells of the mold, followed by the application of gelcoat in step 206 in a manner presently known in the art. Step 208 provides for curing the gelcoat on the first and second shells of the mold, which may be in a manner presently known in the art, or using the further techniques described below. Step 210 provides for dispensing a polymeric material onto the gelcoat of at least one of the shells, and then closing the first and second shells all together with the polymeric material sandwiched between the gelcoats of the first and second shells in step 212. The polymeric material is then cured in step 214 to form an untrimmed product, also referred to as the molded output. Step 216 provides for removing the untrimmed product from the mold, and then in step 218 trimming edges of the untrimmed product to produce the molded product. FIG. 6 depicts an exemplary system 20 for automating or partially automating the process of producing a molded product according to the present disclosure. The system 20 includes a conveyor belt 80 that moves the molds 6 throughout the process of applying raw materials through the final step of trimming the wasted portion 16 off the final molded product for completion of the final molded product 14. The molds 6 begin in an open configuration with the inside surface 36 of the first shell 30 and the inside surface 46 of the second shell 40 respectively, facing upwardly. The first shell 30 and second shell 40 may be connected by a hinge, for example, not shown here. A gelcoat dispenser 82, which may include robotic arms, provides for dispensing of the gelcoat 50 into the first shell 30 and second shell 40, which may be simultaneously for improved process throughput. The molds 6 continue to towards the right on the conveyor belt 80 and pass through a curing station 84 configured to cure the gelcoats 50 within the molds 6. In the example shown, the curing station 84 is configured to have a series of infrared lights 86 configured to cure the gelcoat 50. The width 85 of the curing station 84, along with the intensity of the infrared lights 86 and quantity thereof, may be configured such that the gelcoat 50 is entirely cured by the time the mold 6 exits the curing station 84.

Next, the polymeric material 70 is dispensed into the mold 6 via a polymeric material dispenser 88 which again is shown as a robotic arm. Next, a robotic arm 90 closes the mold 6 such that the polymeric material 70 is sandwiched between the gelcoat 50 layers in the mold 6. The mold 6 is in the closed state and continued towards the right on the conveyor belt 80, during the polymeric material 70 exotherms, cures, and cools to room temperature while passing through a curing station 92. In the example shown the curing station 92 includes fans 94 to aid in the cooling process and to assist in removing the heat generated by the exotherm process. The curing station 92 may be configured to have a width 93 and an intensity of operating the fans 94 (and quantity thereof) such that when the mold 6 exits the curing station 92 the polymeric material 70 is consistently exothermed, cured, and cooled.

The mold 6 then proceeds to a robotic arm 96, which generally functions opposite to the robotic arm 90 previously discussed by re opening the mold 6, this time with a molded output 12 remaining in at least one of the portions of the mold 6 here remaining within the second shell 40. As shown, the molded output 12 includes a first surface area SA1 corresponding to the desire portion for the final molded product, it is also surrounded a its perimeter 10 by a wasted portion having a second surface area SA2. The mold 6 continues along the conveyor belt 80 to a trimmer 98, shown here as a robotic arm with a cutting device 99 (e.g., a rotary blade or laser). The trimmer 98 is configured to trim the wasted portion 16 off the molded output 12 such that the final molded product 14 remains.

Robots that have shown to have particular utility in the herein described process automation are available from numerous manufacturers, such as FANUC and ABB corporations, for example.

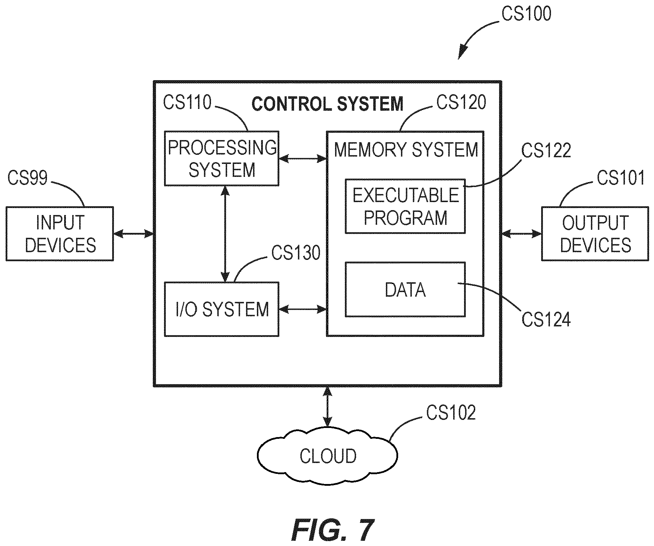

FIG. 7 depicts an exemplary control system CS100 for controlling the elements described above and shown in FIG. 6. Certain aspects of the present disclosure are described or depicted as functional and/or logical block components or processing steps, which may be performed by any number of hardware, software, and/or firmware components configured to perform the specified functions. For example, certain embodiments employ integrated circuit components, such as memory elements, digital signal processing elements, logic elements, look-up tables, or the like, configured to carry out a variety of functions under the control of one or more processors or other control devices. The connections between functional and logical block components are merely exemplary, which may be direct or indirect, and may follow alternate pathways.

In certain examples, the control system CS100 communicates with each of the one or more components of the system 20 shown in FIG. 6 via a communication link CL, which can be any wired or wireless link. The control module CS100 is capable of receiving information and/or controlling one or more operational characteristics of the system 20 and its various sub-systems by sending and receiving control signals via the communication links CL. In one example, the communication link CL is a controller area network (CAN) bus; however, other types of links could be used. It will be recognized that the extent of connections and the communication links CL may in fact be one or more shared connections, or links, among some or all of the components in the system 20. Moreover, the communication link CL lines are meant only to demonstrate that the various control elements are capable of communicating with one another, and do not represent actual wiring connections between the various elements, nor do they represent the only paths of communication between the elements. Additionally, the system 20 may incorporate various types of communication devices and systems, and thus the illustrated communication links CL may in fact represent various different types of wireless and/or wired data communication systems.

The control system CS100 may be a computing system that includes a processing system CS110, memory system CS120, and input/output (I/O) system CS130 for communicating with other devices, such as input devices CS99 (e.g., such as sensors corresponding to robotic arms, the conveyor belt 80, thermometers, and/or flow meters or scales for dispensing, as discussed above) and output devices CS101 (e.g., such as robotic arms, the conveyor belt 80, pumps and other dispensing equipment, and fans, lights, and/or heaters for curing), either of which may also or alternatively be stored in a cloud 102. The processing system CS110 loads and executes an executable program CS122 from the memory system CS120, accesses data CS124 stored within the memory system CS120, and directs the system 20 to operate as described in further detail below. In certain configurations, every specific mold 6 contains one or more RFID chips that allows a sensor (e.g., as an input device CS99) to identify every specific mold 6 and run an exact executable program that is specific to an exact mold 6. This allows seamless operation of production line 20 regardless of the different geometry molds being placed onto production line 20.

The processing system CS110 may be implemented as a single microprocessor or other circuitry, or be distributed across multiple processing devices or sub-systems that cooperate to execute the executable program CS122 from the memory system CS120. Non-limiting examples of the processing system include general purpose central processing units, application specific processors, and logic devices.

The memory system CS120 may comprise any storage media readable by the processing system CS110 and capable of storing the executable program CS122 and/or data CS124. The data CS124 may include programs (e.g., including fill rates, volumes, patterns) for dispensing the polymeric material 70 in specific molds 6, curing profiles, and the like, for example. The memory system CS120 may be implemented as a single storage device, or be distributed across multiple storage devices or sub-systems that cooperate to store computer readable instructions, data structures, program modules, or other data. The memory system CS120 may include volatile and/or non-volatile systems, and may include removable and/or non-removable media implemented in any method or technology for storage of information. The storage media may include non-transitory and/or transitory storage media, including random access memory, read only memory, magnetic discs, optical discs, flash memory, virtual memory, and non-virtual memory, magnetic storage devices, or any other medium which can be used to store information and be accessed by an instruction execution system, for example.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology can alternatively be represented as a series of interrelated states or events, such as in a state diagram. Moreover, not all acts illustrated in a methodology may be required for a novel implementation.

This written description uses examples to disclose the invention, including the best mode, and also to enable any person skilled in the art to make and use the invention. Certain terms have been used for brevity, clarity, and understanding. No unnecessary limitations are to be inferred therefrom beyond the requirement of the prior art because such terms are used for descriptive purposes only and are intended to be broadly construed. The patentable scope of the invention is defined by the claims and may include other examples that occur to those skilled in the art. Such other examples are intended to be within the scope of the claims if they have features or structural elements that do not differ from the literal language of the claims, or if they include equivalent features or structural elements with insubstantial differences from the literal languages of the claims.

## Claims

1. A method of making a molded product, the method comprising:
obtaining a mold (6) having a cavity defined by interior surfaces;
applying a gelcoat (50) into the mold (6);
at least partially curing the gelcoat (50) within the mold (6);
dispensing a viscous polymeric material (70) into the mold (6); and
curing the polymeric material (70) while the polymeric material (70) is sandwiched between the gelcoat (50).

2. The method according to claim 1, wherein the polymeric material (70) is a thermoplastic, optionally wherein the polymeric material (70) is homogenous and unreinforced, optionally wherein the polymeric material (70) is dispensed as a liquid acrylic.

3. The method according to claim 1, wherein the polymeric material (70) is cured for less than 2 hours.

4. The method according to claim 1, wherein curing the polymeric material (70) results in an untrimmed product, further comprising trimming edges of the untrimmed product to produce the molded product.

5. The method according to claim 1, wherein the mold (6) is formed by first and second portions having the interior surfaces, respectively, wherein the gelcoat (50) is applied to both the first and second portions, and wherein the first and second portions are closed together after the gelcoat (50) is cured and after the polymeric material (70) is dispensed into the first portion.

6. The method according to claim 1, wherein the polymeric material (70) is dispensed robotically, optionally wherein the polymeric material (70) is dispensed by weight, wherein the gelcoat (50) is applied robotically, and wherein the gelcoat (50) is cured using one of infrared light, a chemical initiator, and ultraviolet light.

7. The method according to claim 1, wherein the gelcoat (50) and the polymeric material (70) are the same color when cured.

8. The method according to claim 1, wherein the polymeric material (70) dispensed between the gelcoat (50) of the interior surfaces is at least 0.5 inches thick.

9. The method according to claim 1, further comprising applying a release agent to the mold (6) before applying the gelcoat (50).

10. A molded product produced in a mold (6), the molded product comprising:
a first exterior surface formed by a first gelcoat layer, the first gelcoat layer being at least partially cured;
a second exterior surface formed by a second gelcoat layer, the second gelcoat layer being at least partially cured, and the second exterior surface being opposite the first exterior surface with a height defined therebetween; and
a central layer formed by a polymeric material (70), the central layer being sandwiched between the first gelcoat layer and the second gelcoat layer, the central layer being cured;
wherein the thickness of the central layer is at least 80% of the height between the first and second exterior surfaces.

11. The molded product according to claim 10, wherein first gelcoat layer and the central later, and the second gelcoat layer and the central layer, are each chemically bonded together.

12. The molded product according to claim 10, wherein the first exterior surface has a different contour than the second exterior surface.

13. The molded product according to claim 10, wherein the molded product is a hatch for a marine vessel, the hatch having a thickness of at least 0.5 inches and the polymeric material (70) being a homogenous thermoplastic, optionally wherein the polymeric material (70) is dispensed as an acrylic cured for less than 2 hours.

14. The molded product according to claim 10, further comprising trimmed edges between the first and second exterior surfaces.

15. The molded product according to claim 10, wherein the gelcoat (50) and the polymeric material (70) are the same color when cured.

16. A method of making a molded product, the method comprising:
obtaining (202) a mold (6) a first portion and a second portion that when closed together for a cavity between interior surfaces thereof;
applying (204) a release agent onto the interior surfaces of the first portion and the second portion;
applying (206) a gelcoat (50) on top of the release agent on the interior surfaces;
at least partially curing (208) the gelcoat (50) on the interior surfaces;
dispensing (210) a viscous, thermoplastic, polymeric material (70) onto the gelcoat (50) of the first portion of the mold (6), the dispensed polymeric material (70) having a thickness of at least 0.5 inches;
closing (212) the first portion and the second portion of the mold (6) together such that the polymeric material (70) is sandwiched between the gelcoat (50) of the interior surfaces;
curing (214) the polymeric material (70) to form an untrimmed product;
removing (216) the untrimmed product from the mold (6); and
trimming (218) edges of the untrimmed product to produce the molded product.
